# EUROPEAN PATENT APPLICATION

(11) **EP 4 063 180 A1**
(43) Date of publication of application: **28.09.2022**
(21) Application number: 22163075.9
(22) Date of filing: 18.03.2022
(51) Int. Cl.: B60L 58/16

(54) **MANAGEMENT SYSTEM AND ENERGY MANAGEMENT METHOD**

(30) Priority: 22.03.2021 JP 2021047309
(71) Applicant: TOYOTA JIDOSHA KABUSHIKI KAISHA, Toyota-shi, Aichi-ken, 471-8571 (JP)
(72) Inventor: KINOMURA, Shigeki, Toyota-shi, 471-8571 (JP)
(74) Representative: D Young & Co LLP

(57) **Abstract**

A management system (1) includes a management computer (30). The management computer includes a processor. The processor is configured to cause an energy storage device (130) to perform either or both of charging and discharging for energy management, and give a notification to a user of the energy storage device (130). In the notification, the processor is configured to notify the user of a plurality of conditions. For each of the conditions, the processor is configured to notify the user of a predicted degree of progress of deterioration of the energy storage device (130) obtained on an assumption that the processor performs either or both of the charging and discharging for the energy management under that condition.

## Description

### BACKGROUND OF THE INVENTION

### 1. Field of the Invention

The present disclosure relates to management systems and energy management methods.

### 2. Description of Related Art

A mechanism is known in which a reward (incentive) is paid to consumers who respond to a request for energy management from an electricity market (e.g., a balancing market) or an electric utility (e.g., an electric power company). Japanese Unexamined Patent Application Publication No. 2019-080403 (JP 2019-080403 A) discloses a system for notifying a vehicle user of the degree of progress of deterioration of an in-vehicle battery associated with charging and discharging for energy management. In this system, the user can check the degree of progress of deterioration of the in-vehicle battery by the notification.

### SUMMARY OF THE INVENTION

According to the above system, the user can determine whether to participate in the energy management by considering the degree of progress of deterioration of the battery associated with charging and discharging for the energy management. However, when the user is only notified of the degree of progress of deterioration of the battery associated with charging and discharging for the energy management, it is sometimes difficult for the user to determine whether the energy management is energy management he or she desires. Depending on the form of charging and discharging, the user may want to allow some deterioration progress of the battery and participate in the energy management.

The present disclosure was made to solve the above problem, and it is an object of the present disclosure to make it easier for a user of an energy storage device to appropriately determine whether to participate in energy management.

An aspect of the present disclosure relates to a management system. The management system includes a management computer. The management computer includes a processor. The processor is configured to cause an energy storage device to perform either or both of charging and discharging for energy management, and give a notification to a user of the energy storage device. In the notification, the processor is configured to notify the user of a plurality of conditions and, for each of the conditions, notify the user of a predicted degree of progress of deterioration of the energy storage device obtained on an assumption that the processor performs either or both of the charging and discharging for the energy management under that condition.

Hereinafter, the predicted degree of progress of deterioration of the energy storage device obtained on the assumption that charging and discharging for energy management are performed under the condition (also referred to as "charge and discharge condition") is also referred to as the "predicted degree of progress of deterioration." The predicted degree of progress of deterioration indicates how much deterioration of the energy storage device will progress due to the energy management.

According to the above management system, the user of the energy storage device is notified of the predicted degree of progress of deterioration for each charge and discharge condition. Notifying the user of the charge and discharge conditions makes it easier for the user to grasp the form of charging and discharging for the energy management. The user can determine whether to participate in the energy management by considering not only the degree of progress of deterioration of the energy storage device associated with the energy management (predicted degree of progress of deterioration) but also the form of charging and discharging for the energy management. The user of the energy storage device can therefore more easily appropriately determine whether to participate in the energy management.

The predicted degree of progress of deterioration may be expressed numerically, or may be expressed by predetermined deterioration categories (e.g., high, medium, and low, or levels A, B, and C). The notification unit may determine the charge and discharge conditions so that the predicted degree of progress of deterioration varies between or among the charge and discharge conditions.

The management computer may be a computer that manages a power network. The energy management may be balancing of the power network.

In the above aspect, the energy storage device may be mounted on a vehicle. A user terminal may be registered in the management computer. The user terminal is a terminal of the user. The processor may be configured to send a signal for the notification to the user terminal. The user terminal may include either or both of an in-vehicle terminal mounted on the vehicle and a mobile terminal carried by the user.

According to the above configuration, the management computer can give the above notification to a vehicle user (that is the user of the energy storage device). The vehicle user can participate in the energy management by using the energy storage device mounted on the vehicle.

The user terminal may be the in-vehicle terminal or the mobile terminal. The in-vehicle terminal and the mobile terminal that are configured to communicate with each other may cooperate to function as the user terminal.

The vehicle may be an electrically powered vehicle. Electrically powered vehicles are vehicles configured to run on electric power stored in the energy storage device. Electrically powered vehicles include fuel cell electric vehicles (FCEVs) and range extender electric vehicles in addition to battery electric vehicles (BEVs), hybrid electric vehicles (HEVs), and plug-in hybrid electric vehicles (PHEVs).

In the above aspect, the user terminal may be configured to send travel plan information to the management computer, the travel plan information being information on a travel plan of the vehicle. The processor may be configured to determine, based on the travel plan information, the conditions to be notified to the user by the notification. According to this configuration, the notification unit can more easily present to the user the charge and discharge conditions that suit the travel plan of the vehicle.

In the above aspect, the processor may be configured to determine, based on a specification of the vehicle, the conditions to be notified to the user by the notification. According to this configuration, the notification unit can more easily present to the user the charge and discharge conditions that suit the specification of the vehicle.

In the above aspect, the user terminal may be configured to accept an input from the user. The user terminal may be configured to, when the user terminal receives the signal for the notification and then receives from the user an input selecting one of the conditions indicated by the signal, the user terminal send the condition selected by the user to the management computer.

According to the above configuration, the charge and discharge condition desired by the user of the energy storage device can be sent to the management computer. The management computer can determine whether to make a request for energy management to the user by using the charge and discharge condition desired by the user.

In the above aspect, the user terminal may be configured to set either permission for participation or prohibition of participation in energy management based on the input from the user. The user terminal may be configured to, when the user terminal receives a request for energy management with the prohibition of participation set in the user terminal, notify the management computer of non-participation in the energy management according to the request. Hereinafter, the notification of non-participation in the energy management according to the request is also referred to as "notification of non-participation."

In the above management system, the user of the energy storage device can set prohibition of participation (non-participation in the energy management) in advance in the user terminal. In the case where prohibition of participation is set in advance in the user terminal, the user terminal automatically gives a notification of non-participation to the management computer in response to the request for energy management without requiring the user to select participation or non-participation in the energy management. Convenience for the user is thus improved.

In the above aspect, the user terminal may be configured to permit remote charge and discharge control of the energy storage device by the processor when the user terminal determines to participate in the energy management according to the request. The user terminal may be configured to prohibit the remote charge and discharge control when the user terminal determines not to participate in the energy management according to the request.

According to the above configuration, the user terminal permits the remote charge and discharge control when it determines to participate in the energy management according to the request. The control unit of the management computer can therefore perform the energy management through the remote charge and discharge control of the energy storage device. The user terminal prohibits the remote charge and discharge control when it determines not to participate in the energy management according to the request. This reduces the possibility that unplanned remote charge and discharge control may be performed.

In the above aspect, each of the conditions may indicate at least one of the following: an allowable charging method, an allowable maximum charging power value, an upper limit of state of charge (SOC) of the energy storage device at which charging is allowed, and time of day during which charging is allowed.

According to the above configuration, the user of the energy storage device can more easily grasp the form of charging for the energy management. Each of the charge and discharge conditions may indicate whether charging power is limited based on either or both of the temperature of the energy storage device and the outside air temperature.

In the above aspect, each of the conditions may indicate at least one of the following: an allowable discharging method, an allowable maximum discharging power value, an lower limit of state of charge (SOC) of the energy storage device at which discharging is allowed, and time of day during which discharging is allowed.

According to the above configuration, the user of the energy storage device can more easily understand the form of discharging for the energy management. Each of the charge and discharge conditions may indicate whether discharging power is limited based on either or both of the temperature of the energy storage device and the outside air temperature.

The state of charge (SOC) indicates the remaining capacity. For example, the SOC is the ratio of the current amount of stored power to the amount of stored power in a fully charged state and varies between 0% and 100%.

An aspect of the present disclosure relates to an energy management method. The energy management method includes: notifying a user of a plurality of conditions, the user being a user of an energy storage device; notifying the user of, for each of the conditions, a predicted degree of progress of deterioration of the energy storage device obtained on an assumption that the energy storage device performs either or both of charging and discharging for energy management under that condition; and performing either or both of the charging and the discharging for the energy management under one of the conditions.

As in the management system described above, according to the energy management method, the user of the energy storage device can more easily appropriately determine whether to participate in the energy management.

According to the present disclosure, a user of an energy storage device can more easily appropriately determine whether to participate in energy management.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 shows a configuration of a vehicle according to an embodiment of the present disclosure;
FIG. 2 shows a configuration of a management system according to the embodiment of the present disclosure;
FIG. 3 is a flowchart of a process related to determination, notification, and selection of charge and discharge conditions in an energy management method according to the embodiment of the present disclosure;
FIG. 4 is a flowchart showing details of a step related to the determination of the charge and discharge conditions shown in FIG. 3;
FIG. 5 shows an example of an input screen displayed in the process shown in FIG. 3;
FIG. 6 shows a first modification of the input screen shown in FIG. 5;
FIG. 7 shows a second modification of the input screen shown in FIG. 5;
FIG. 8 is a flowchart of a process of deleting the charge and discharge condition set in a user terminal in the energy management method according to the embodiment of the present disclosure;
FIG. 9 is a flowchart of a process of setting permission for participation or prohibition of participation in energy management in the user terminal in the energy management method according to the embodiment of the present disclosure;
FIG. 10 is a flowchart of a process that is performed when the user terminal receives a request for energy management in the energy management method according to the embodiment of the present disclosure; and
FIG. 11 is a flowchart of a process related to remote charge and discharge control in the energy management method according to the embodiment of the present disclosure.

### DETAILED DESCRIPTION OF EMBODIMENTS

Hereinafter, an embodiment of the present disclosure will be described in detail with reference to the drawings. The same or corresponding parts are denoted by the same signs throughout the drawings, and description thereof will not be repeated.

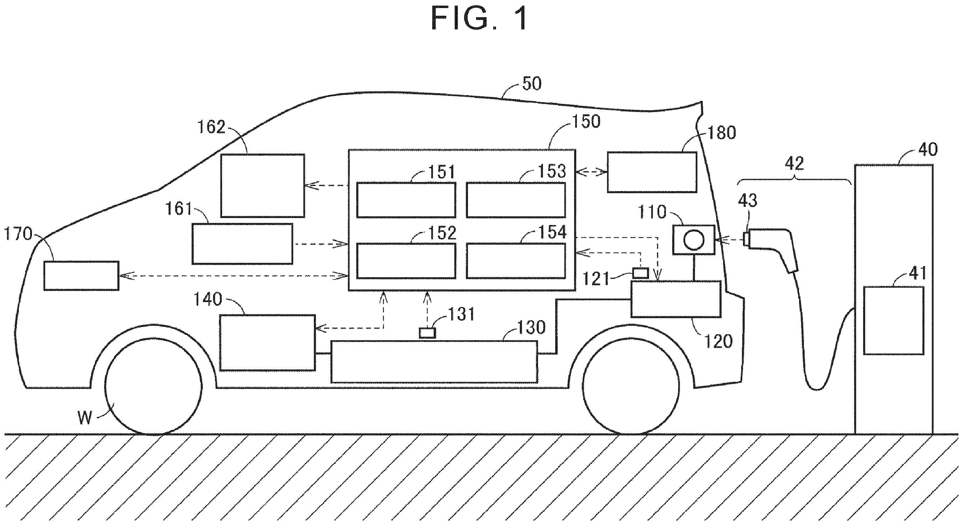

FIG. 1 shows a configuration of a vehicle according to the embodiment. Referring to FIG. 1, a vehicle 50 includes a battery 130 that stores electric power for running the vehicle 50. The vehicle 50 is configured to run on the electric power stored in the battery 130. The vehicle 50 according to the present embodiment is an battery electric vehicle (BEV) not equipped with an engine (internal combustion engine).

The battery 130 includes a secondary battery such as a lithium ion battery or a nickel metal hydride battery. In the present embodiment, the secondary battery is a battery pack including a plurality of lithium ion batteries. The battery pack is composed of a plurality of secondary batteries (generally also referred to as "cells") electrically connected to each other. Other energy storage device such as an electric double-layer capacitor may be used instead of the secondary battery. The battery 130 according to the present embodiment is an example of the "energy storage device" according to the present disclosure.

The vehicle 50 includes an electronic control unit (hereinafter referred to as "ECU") 150. The ECU 150 is configured to perform charge control and discharge control of the battery 130. The ECU 150 is also configured to control communication with the outside of the vehicle 50.

The vehicle 50 further includes a monitoring module 131 that monitors the state of the battery 130. The monitoring module 131 includes various sensors that detect the state (e.g., voltage, current, and temperature) of the battery 130. The monitoring module 131 outputs the detection results of the sensors to the ECU 150. The monitoring module 131 may be a battery management system (BMS) that has a state of charge (SOC) estimation function, a state of health (SOH) estimation function, a cell voltage equalization function, a diagnostic function, and a communication function in addition to the above sensor functions. The ECU 150 can acquire the state (e.g., temperature, current, voltage, SOC, and internal resistance) of the battery 130 based on the output of the monitoring module 131.

Electric vehicle supply equipment (EVSE) 40 is power supply equipment located outside the vehicle 50. A power supply circuit 41 is a built-in power supply circuit in a body of the EVSE 40. A charging cable 42 is connected to the body of the EVSE 40. The charging cable 42 may always be connected to the body of the EVSE 40 or may be detachable from the body of the EVSE 40. The charging cable 42 has a connector 43 at its end and includes a power line inside.

The vehicle 50 includes an inlet 110 and a charger and discharger 120 for contact charging. The inlet 110 is configured to receive electric power supplied from the outside of the vehicle 50. The inlet 110 is configured so that the connector 43 of the charging cable 42 can be connected to the inlet 110. The vehicle 50 is plugged in by connecting (plugging in) the connector 43 of the charging cable 42 connected to the body of the EVSE 40 to the inlet 110 of the vehicle 50.

The charger and discharger 120 is located between the inlet 110 and the battery 130. The charger and discharger 120 includes a relay and a power conversion circuit (both not shown). The relay opens and closes a power path from the inlet 110 to the battery 130. The charger and discharger 120 may further include at least one of the following components: a rectifier circuit, a power factor correction circuit, an insulation circuit, a transformer (e.g., an isolation transformer), and a filter circuit. The relay and the power conversion circuit in the charger and discharger 120 are controlled by the ECU 150.

The vehicle 50 further includes a monitoring module 121 that monitors the state of the charger and discharger 120. The monitoring module 121 includes various sensors that detect the state of the charger and discharger 120, and outputs the detection results of the sensors to the ECU 150. In the present embodiment, the monitoring module 121 is configured to detect the voltage and current input to the power conversion circuit and the voltage and current output from the power conversion circuit. The monitoring module 121 is configured to detect the charging power and discharging power of the battery 130.

External charging (i.e., charging the battery 130 with electric power supplied from the outside of the vehicle) and external power feeding (i.e., supplying electric power from the vehicle 50 to the outside of the vehicle) can be performed with the vehicle 50 plugged in. Electric power for external charging is supplied from, for example, the EVSE 40 to the inlet 110. The charger and discharger 120 is configured to convert the electric power received by the inlet 110 to electric power suitable for charging the battery 130 and output the converted electric power to the battery 130. Electric power for external power feeding is supplied from the battery 130 to the charger and discharger 120. The charger and discharger 120 is configured to convert the electric power supplied from the battery 130 to electric power suitable for external power feeding and output the converted electric power to the inlet 110. The relay of the charger and discharger 120 is closed (connected) when either external charging or external power feeding is performed. The relay of the charger and discharger 120 is opened (disconnected) when neither external charging nor external power feeding is performed.

The ECU 150 includes a processor 151, a random access memory (RAM) 152, a storage device 153, and a timer 154. The ECU 150 may be a computer. The processor 151 may be a central processing unit (CPU). The RAM 152 functions as a working memory for temporarily storing data that is processed by the processor 151. The storage device 153 is configured to save stored information. The storage device 153 includes, for example, a read-only memory (ROM) and a rewritable nonvolatile memory. The storage device 153 stores, in addition to a program, information to be used in the program (e.g., maps, mathematical expressions, and various parameters). In the present embodiment, various controls in the ECU 150 are performed by the processor 151 executing the program stored in the storage device 153. The various controls in the ECU 150 need not necessarily be performed by software, and may be performed by dedicated hardware (electronic circuit). The ECU 150 may include any number of processors, and may have a processor for each predetermined control.

The timer 154 is configured to notify the processor 151 when set time comes. When the time set on the timer 154 comes, the timer 154 sends a notification signal to the processor 151. In the present embodiment, the timer 154 is a timer circuit. However, the timer 154 may be implemented by software instead of hardware (timer circuit). The ECU 150 can acquire the current time using a built-in real-time clock (RTC) circuit (not shown) in the ECU 150.

The vehicle 50 further includes a traction drive unit 140, an input device 161, an instrument panel 162, a navigation system (hereinafter referred to as "NAVI") 170, communication equipment 180, and drive wheels W. The drive system for the vehicle 50 is not limited to front-wheel drive shown in FIG. 1, and may be rear-wheel drive or four-wheel drive.

The traction drive unit 140 includes a power control unit (PCU) and a motor generator (MG), both not shown, and is configured to drive the vehicle 50 with electric power stored in the battery 130. The PCU includes, for example, an inverter, a converter, and a relay (hereinafter referred to as "system main relay (SMR)") (none of which are shown). The PCU is controlled by the ECU 150. For example, the MG is a three-phase alternating current (AC) motor generator. The MG is configured to be driven by the PCU to rotate the drive wheels W. The PCU drives the MG with electric power supplied from the battery 130. The MG is also configured to regeneratively generate electric power and supply the generated electric power to the battery 130. The SMR is configured to open and close a power path from the battery 130 to the MG. The SMR is closed (connected) when the vehicle 50 is traveling.

The input device 161 is a device that accepts inputs from the user. The input device 161 is operated by the user and outputs signals corresponding to the user's operations to the ECU 150. Examples of the input device 161 include various switches, various pointing devices, a keyboard, and a touch panel. The input device 161 may include a smart speaker that accepts voice inputs.

The user can set travel plan information in the ECU 150 through the input device 161. The travel plan information is information on a travel plan of the vehicle 50. The travel plan information may include at least one of the following types of information: time of day when the vehicle 50 is going to travel, travel distance, destination, and travel route.

The instrument panel 162 is configured to display information on the vehicle 50. For example, the instrument panel 162 displays various kinds of information on the vehicle 50 as measured by various sensors mounted on the vehicle 50. The instrument panel 162 may be a touch panel display. The instrument panel 162 is controlled by the ECU 150.

The NAVI 170 includes a processor, a storage device, a touch panel display, and a Global Positioning System (GPS) module (none of which are shown). The NAVI 170 can identify the position of the vehicle 50 using the GPS module. The NAVI 170 is configured to perform route search for finding a travel route (e.g., the shortest route) from the current position of the vehicle 50 to the destination and display the travel route found by the route search on a map.

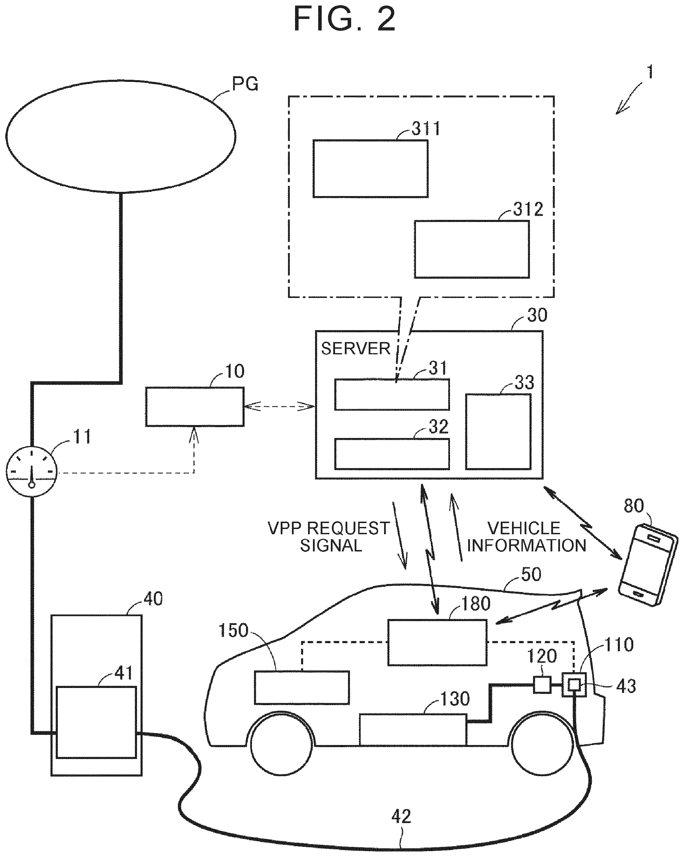

The communication equipment 180 includes various communication interfaces (I/Fs). The communication equipment 180 includes a communication I/F for wireless communication with a server 30 (see FIG. 2) that will be described later. The communication equipment 180 may include a Data Communication Module (DCM). The communication equipment 180 may include a communication I/F compatible with a fifth generation mobile communication system (5G). The ECU 150 is configured to communicate with a communication device outside the vehicle 50 through the communication equipment 180.

FIG. 2 shows a configuration of a management system according to the present embodiment. A management system 1 shown in FIG. 2 is a vehicle grid integration (VGI) system. The management system 1 functions as a virtual power plant (VPP). The VPP is a mechanism that aggregates a large number of distributed energy resources (DERs) by advanced energy management technology using the Internet of Things (IoT) and performs remote integrated control of the DERs to make the DERs function as if they were a single power plant. An example of the DERs is energy resources owned by customers (hereinafter also referred to as "demand-side resources (DSRs)"). In the management system 1, the DSR for implementing the VPP is the vehicle 50 (i.e., an electrically powered vehicle equipped with an energy storage device). For example, the vehicle 50 is a personally owned vehicle (POV), namely a vehicle owned by an individual. The EVSE 40 may be either home EVSE installed at the home of the user of the vehicle 50 or public EVSE.

In the present embodiment, a power grid PG, a server 10, the server 30, a smart meter 11, a plurality of EVSEs (only the EVSE 40 is shown), and a plurality of DSRs (only the vehicle 50 is shown) form the management system 1. The numbers of electrically powered vehicles and EVSEs included in the management system 1 are independent of each other and can be determined as desired. The management system 1 may include 10 or more electrically powered vehicles and 10 or more EVSEs, or may include 100 or more electrically powered vehicles and 100 or more EVSEs.

A mobile terminal 80 is a mobile terminal carried by the user of the vehicle 50. In the present embodiment, the mobile terminal 80 is a smartphone with a touch panel display. However, the mobile terminal 80 is not limited to a smartphone with a touch panel display and may be any mobile terminal. For example, the mobile terminal 80 may be a tablet, a wearable device (e.g., a smart watch), or an electronic key.

The vehicle 50 shown in FIG. 2 is electrically connected to the EVSE 40. When the connector 43 of the charging cable 42 connected to the body of the EVSE 40 is connected to the inlet 110 of the vehicle 50, the vehicle 50 and the EVSE 40 can communicate with each other, and electric power can also be transferred between the EVSE 40 and the vehicle 50. The vehicle 50 is thus ready for external charging and external power feeding. The communication equipment 180 mounted on the vehicle 50 is configured to communicate with the EVSE 40 via the charging cable 42.

The built-in power supply circuit 41 in the EVSE 40 is electrically connected to the power grid PG via the smart meter 11. For example, the battery 130 is externally charged when electric power is supplied from the power grid PG to the vehicle 50 via the power supply circuit 41 and the charging cable 42. When the vehicle 50 performs external power feeding to the EVSE 40, electric power can be reversely supplied from the vehicle 50 to the power grid PG via the charging cable 42 and the power supply circuit 41. The power supply circuit 41 converts the electric power supplied from the power grid PG to electric power suitable for external charging, and also converts the electric power supplied from the vehicle 50 to electric power suitable for reverse power flow.

The smart meter 11 is configured to measure the amount of power supplied from the EVSE 40 to the vehicle 50. The smart meter 11 is also configured to measure the amount of power reversely supplied from the vehicle 50 to the EVSE 40. The smart meter 11 is configured to measure power usage at predetermined time intervals (e.g., every 30 minutes), store the measured power usage, and send the measured power usage to the server 10. The server 10 sends the measured value of the smart meter 1 1 to the server 30 as needed. The server 10 may send the measured value of the smart meter 11 to the server 30 either periodically or as requested by the server 30.

The communication equipment 180 mounted on the vehicle 50 is configured to wirelessly communicate with the server 30. The server 30 according to the present embodiment is an example of the "management computer" according to the present disclosure. Signals that are transferred between the communication equipment 180 and the server 30 may be encrypted signals. In the present embodiment, the communication equipment 180 mounted on the vehicle 50 and the mobile terminal 80 are configured to wirelessly communicate with each other. The ECU 150 can control the mobile terminal 80 by wireless communication to cause the mobile terminal 80 to give notifications to the user. The communication between the communication equipment 180 and the mobile terminal 80 may be short-range communication (e.g., direct communication both inside and around the vehicle) such as Bluetooth (registered trademark).

The detected values of various sensors mounted on the vehicle 50 are input to the ECU 150. In addition to the monitoring modules 121, 131, the vehicle 50 is also equipped with, for example, a position sensor, a vehicle speed sensor, an accelerator sensor, an outside air temperature sensor, and a charging cable connection detection circuit that are not shown in the figures. The ECU 150 uses the detected values of these sensors for control as needed. The ECU 150 sequentially sends the state of the vehicle 50 to the server 30. For example, during remote charge and discharge control that will be described later, the server 30 remotely controls the vehicle 50 while referring to the information received from the vehicle 50.

The mobile terminal 80 has predetermined application software (hereinafter simply referred to as the "app") installed therein. The mobile terminal 80 is carried by the user of the vehicle 50 and can send and receive information to and from the server 30 via the app. The user can operate the app via the touch panel display (not shown) of the mobile terminal 80. The touch panel display of the mobile terminal 80 is configured to give notifications to the user of the vehicle 50.

The user of the vehicle 50 can enter the specifications of the vehicle 50 to the mobile terminal 80. In the present embodiment, specifications regarding charging and discharging of the vehicle 50 are entered to the mobile terminal 80 as the specifications of the vehicle 50. The specifications of the vehicle 50 entered to the mobile terminal 80 are sent from the mobile terminal 80 to the server 30. The specifications regarding charging and discharging of the vehicle 50 may include a charging and discharging method that can be performed by the vehicle 50. The user may enter the charging and discharging method that can be performed by the vehicle 50 to the mobile terminal 80 by considering not only the equipment of the vehicle 50 but also the performance of available EVSEs (e.g., EVSEs around the user's home and/or EVSEs around the user's workplace). The specifications regarding charging and discharging of the vehicle 50 may include either or both of the maximum charging and discharging power values and the temperature characteristics of the battery 130.

The server 10 is a server that belongs to a power transmission and distribution business operator. In the present embodiment, an electric power company serves as both a power producer and a power transmission and distribution business operator. Power plants and power transmission and distribution facilities, both not shown, constitute a power network (i.e., the power grid PG). The power transmission and distribution facilities include transmission lines, substations, and distribution lines, and are configured to transmit and distribute electric power supplied from the power plants. Examples of the power plants include thermal power plants, hydroelectric power plants, nuclear power plants, and variable renewable energy sources (photovoltaic power generation facilities, wind power generation facilities, etc.).

The electric power company maintains and manages the server 10, the smart meter 11, and the power grid PG. The electric power company can make a profit by, for example, doing business with customers who use electric power (e.g., individuals or companies). In the present embodiment, the electric power company is a grid operator who runs the power grid PG.

An electric utility that aggregates the DERs and provides energy management services is called an "aggregator." The electric power company can work with, for example, the aggregator to perform power adjustment (e.g., balance supply and demand) of the power grid PG. The electric power company or the aggregator makes a request for power adjustment to each customer, and each customer performs power adjustment of the power grid PG in response to the request. This mechanism is generally called "demand response (DR)." Hereinafter, the request for power adjustment of the power grid PG is also referred to as the "VPP request." The VPP request is an example of the "request for energy management" according to the present disclosure.

Each of the server 10 and the server 30 is a computer that manages the power grid PG. The server 30 is a server that belongs to the aggregator. An automaker may also serve as the aggregator. Automakers can easily obtain information on vehicles they manufactured. Each vehicle included in the management system 1 is registered in the server 30. Each vehicle sequentially sends information on the vehicle (e.g., the position of the vehicle, the connection state of the charging cable, and the amount of stored power of the vehicle) to the server 30.

The server 30 includes a control device 31, a storage device 32, and a communication device 33. The control device 31 may be a computer. The control device 31 includes a processor, and is configured to perform predetermined information processing and control the communication device 33. The storage device 32 is configured to save various kinds of information. The communication device 33 includes various communication I/Fs. The control device 31 is configured to communicate with the outside through the communication device 33. The server 30 is configured to communicate with the server 10, the vehicle 50, and the mobile terminal 80. In the present embodiment, the server 30 and the EVSE 40 do not communicate with each other. However, the server 30 and the EVSE 40 may be configured to communicate with each other. The server 30 may be configured to communicate with the vehicle 50 via the EVSE 40.

A plurality of vehicles (including the vehicle 50) and a plurality of users (including the user of the vehicle 50) are registered in the server 30. User terminals (including the mobile terminal 80) together with the users are also registered in the server 30. The server 30 is configured to manage information on each registered user (hereinafter also referred to as the "user information") and information on each registered vehicle (hereinafter also referred to as the "vehicle information"). Information on each user terminal is included in either or both of the user information and the vehicle information. The user information and the vehicle information are stored in the storage device 32.

Each user is given identification information (user identification (ID)) that identifies the user, and the server 30 identifies and manages the user information by the user ID. The user ID also serves as information (terminal ID) that identifies the mobile terminal carried by the user. The user information includes a communication address of the mobile terminal carried by the user and information (vehicle ID) that identifies the vehicle belonging to the user. Each vehicle is also given identification information (vehicle ID) that identifies the vehicle, and the server 30 identifies and manages the vehicle information by the vehicle ID. The vehicle information includes specifications of the vehicle (e.g., specifications regarding charging and discharging), a communication address of a wireless communication device (e.g., the communication equipment 180) mounted on the vehicle, and information received from the vehicle (e.g., information indicating the position and state of the vehicle).

In the present embodiment, the aggregator's terminal (server 30) is configured to communicate with the electric power company's terminal (server 10) and the vehicle user's terminal (communication equipment 180 and mobile terminal 80). However, the present disclosure is not limited to this, and the management system 1 may separately include a server that contacts the electric power company and a server that contacts the vehicle user. These servers may be managed by different electric utilities (e.g., upper and lower aggregators).

When the server 10 performs power adjustment, the server 10 first selects the number of aggregators required for the power adjustment from a plurality of aggregators and makes a VPP request to the selected aggregator(s). The server 30 then selects the number of VPP cooperating vehicles required to respond to the VPP request of the server 10. The VPP cooperating vehicles refer to vehicles that participate in the VPP (requested power adjustment). When the server 30 finishes selecting the VPP cooperating vehicles, the server 30 sends a VPP request signal to the user terminal of each VPP cooperating vehicle. The VPP request signal may include the type of requested power adjustment (e.g., increased charging, reduced charging, or discharging) and a VPP request period (more specifically, the start and end times of the requested power adjustment).

The users of the VPP cooperating vehicles can receive a predetermined reward (incentive) by performing charging or discharging according to the request from the aggregator. The server 30 measures the amount of power adjustment of each VPP cooperating vehicle with a predetermined electricity meter. The predetermined electricity meter may be the smart meter 11 or an electricity meter mounted on the vehicle 50 (e.g., the monitoring modules 121, 131). The electricity meter may be mounted at any location. The EVSE 40 may include a built-in electricity meter. The electricity meter may be attached to a portable charging cable.

In the present embodiment, the control device 31 of the server 30 includes a control unit 311 and a notification unit 312. In the control device 31 according to the present embodiment, each of these units is embodied by the processor and a program that is executed by the processor. The program may be stored in a storage device (not shown) of the control device 31 or may be stored in the storage device 32. Each of these units may be embodied by dedicated hardware (electronic circuit).

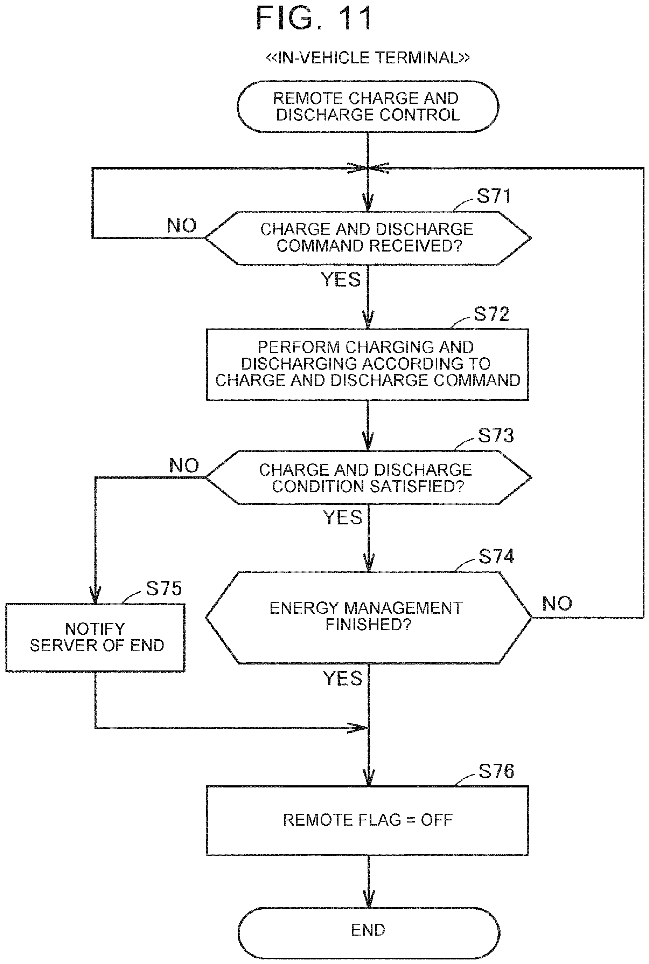

The control unit 311 is configured to cause the battery 130 to perform charging and discharging for energy management (hereinafter also referred to as "VPP charging and discharging"). In the present embodiment, the control unit 311 causes the battery 130 to perform VPP charging and discharging by remote charge and discharge control (see FIG. 11) that will be described later.

The notification unit 312 gives a notification to the user of the vehicle 50 (the user of the battery 130) (hereinafter, also referred to as "VPP notification"). The notification unit 312 is configured to give a VPP notification to notify the user of a plurality of charge and discharge conditions and, for each of the charge and discharge conditions, notify the user of a predicted degree of progress of deterioration of the battery 130 obtained on the assumption that the control unit 311 performs VPP charging and discharging under that charge and discharge condition.

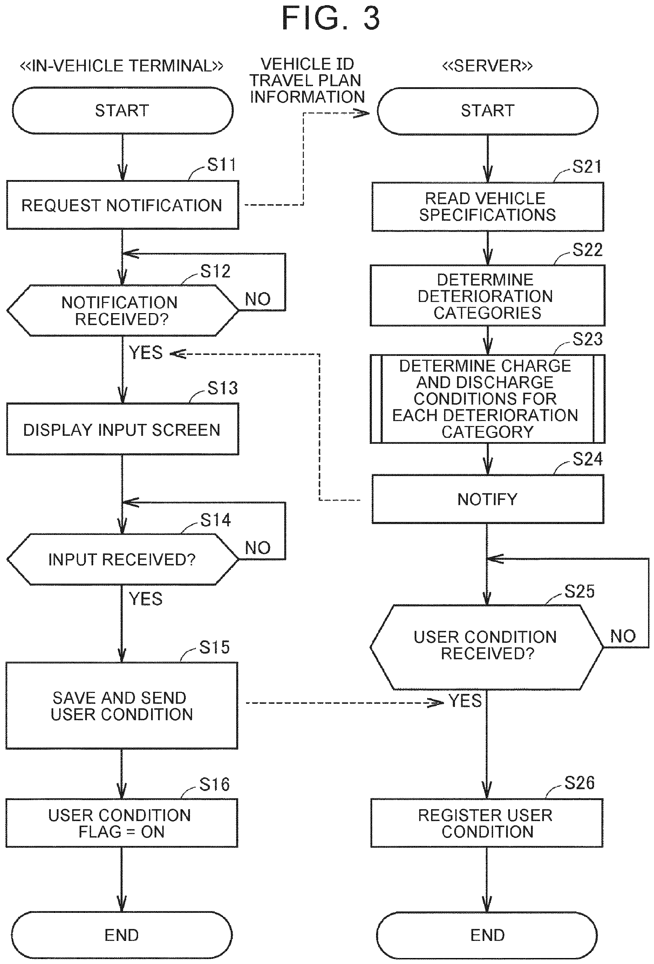

FIG. 3 is a flowchart of a process related to determination, notification, and selection of the charge and discharge conditions by an in-vehicle terminal and the server 30. In the present embodiment, the ECU 150, the input device 161, the instrument panel 162, the NAVI 170, and the communication equipment 180 that are mounted on the vehicle 50 serve as the in-vehicle terminal. The in-vehicle terminal according to the present embodiment is an example of the "user terminal" according to the present disclosure. For example, as will be described below, the process shown in FIG. 3 is started when the user makes a request for a VPP notification to the ECU 150 through the input device 161. Hereinafter, each step in the flowchart is denoted by a step number that starts with the letter "S."

Referring to FIG. 3 together with FIGS. 1 and 2, in S11, the ECU 150 of the vehicle 50 makes a request for a VPP notification to the server 30. At this time, the ECU 150 sends to the server 30 the vehicle ID and travel plan information together with a signal requesting a VPP notification. When no travel plan information is set in the ECU 150, the ECU 150 does not send travel plan information to the server 30. In S11, the ECU 150 may also send the number of deterioration categories specified by the user through the input device 161 to the server 30. The number of deterioration categories specified by the user may be 2 to 10 or may be 11 or more. Thereafter, in S12, the ECU 150 waits until it receives a VPP notification.

When the control device 31 of the server 30 (more specifically, the notification unit 312) receives the signal requesting a VPP notification, the control device 31 identifies the vehicle 50 based on the vehicle ID and reads the specifications of the vehicle 50 from the storage device 32 in S21.

The notification unit 312 then determines deterioration categories in S22. When the notification unit 312 received the number of deterioration categories from the vehicle 50 (more specifically, the in-vehicle terminal), the notification unit 312 determines that number of deterioration categories. When the notification unit 312 did not receive the number of deterioration categories from the vehicle 50, the notification unit 312 determines a predetermined number of deterioration categories (e.g., two deterioration categories). An example in which the deterioration categories determined in S22 are a first category (low category) and a second category (high category) will be described below.

In S23, the notification unit 312 then determines charge and discharge conditions for each deterioration category (e.g., two charge and discharge conditions) based on the specifications of the vehicle 50 and the travel plan information. Specifically, in S23, the notification unit 312 determines a charge and discharge condition that belongs to the first category and a charge and discharge condition that belongs to the second category. The charge and discharge condition that belongs to the first category is determined so that the predicted degree of progress of deterioration becomes equal to or higher than a reference value (predetermined value). The charge and discharge condition that belongs to the second category is determined so that the predicted degree of progress of deterioration becomes lower than the reference value. The predicted degree of progress of deterioration corresponding to the charge and discharge condition is the predicted degree of progress of deterioration of the energy storage device (in the present embodiment, the battery 130) obtained on the assumption that charging and discharging for energy management are performed under that charge and discharge condition.

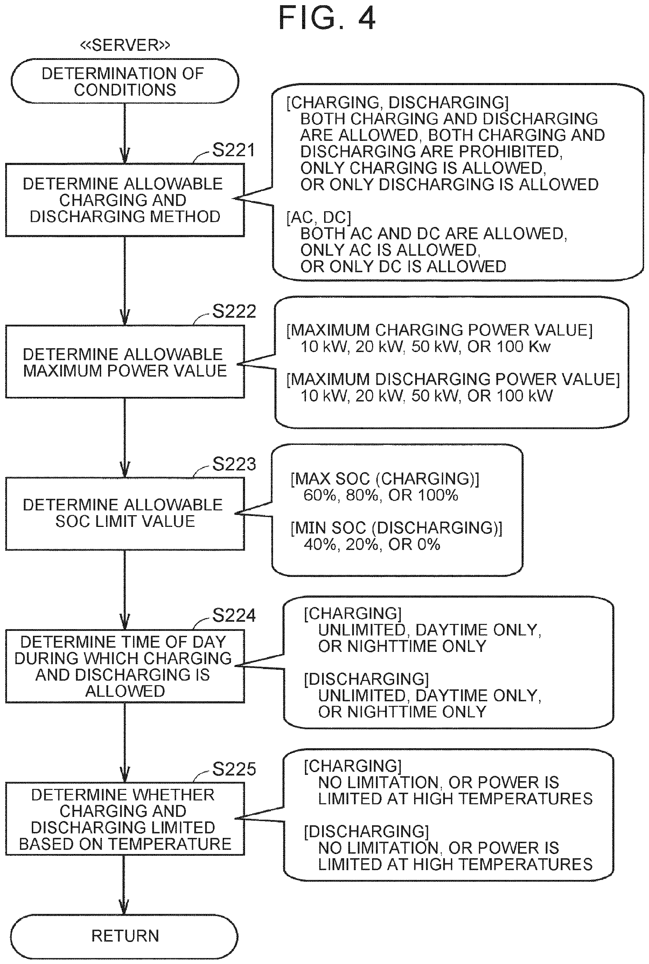

FIG. 4 is a flowchart showing the details of S23 of FIG. 3. In the present embodiment, the charge and discharge condition that belongs to the first category and the charge and discharge condition that belongs to the second category indicate whether charging is allowed. The charge and discharge condition that allows charging further indicates an allowable charging method, an allowable maximum charging power value, the SOC upper limit of the battery 130 at which charging is allowed, the time of day during which charging is allowed, and whether charging power is limited based on temperature. The charge and discharge condition that belongs to the first category and the charge and discharge condition that belongs to the second category also indicate whether discharging is allowed. The charge and discharge condition that allows discharging further indicate an allowable discharging method, an allowable maximum discharging power value, the SOC lower limit of the battery 130 at which discharging is allowed, the time of day during which discharging is allowed, and whether discharging power is limited based on temperature. Each charge and discharge condition is determined by steps S221 to S225 shown below. In FIG. 4, steps S221, S222, S223, S224, and S225 are shown in this order. However, the order of these steps can be changed as appropriate. Alternatively, these steps may be performed at the same time.

Referring to FIG. 4 together with FIGS. 1 and 2, in S221, the notification unit 312 determines an allowable charging and discharging method for each of the charge and discharge conditions that belong to the first and second categories. In the present embodiment, the notification unit 312 selects one of the following regarding charging (corresponding to external charging) and discharging (corresponding to external power feeding): both charging and discharging are allowed, both charging and discharging are prohibited, only charging is allowed, and only discharging is allowed. The predicted degree of progress of deterioration tends to be the highest when both charging and discharging are allowed, followed by when only charging or discharging is allowed, and when both charging and discharging are prohibited. The notification unit 312 also selects one of the following regarding the alternating current (AC) method and the direct current (DC) method: both AC and DC are allowed, only AC is allowed, and only DC is allowed. The predicted degree of progress of deterioration tends to be the highest when both AC and DC are allowed, followed by when only DC is allowed, and when only AC is allowed.

In S222, the notification unit 312 determines an allowable maximum power value for each of the charge and discharge conditions that belong to the first and second categories. In the present embodiment, the notification unit 312 selects one of the following values as the maximum power value: 10 kW, 20 kW, 50 kW, and 100 kW. The larger the maximum power value, the higher the predicted degree of progress of deterioration tends to be. An allowable maximum charging power value is determined for the charge and discharge condition that allows charging. An allowable maximum discharging power value is determined for the charge and discharge condition that allows discharging. For the charge and discharge condition that allows both charging and discharging, the allowable maximum power value may be different between charging and discharging.

In S223, the notification unit 312 determines SOC limit values at which charging and discharging are allowed for each of the charge and discharge conditions that belong to the first and second categories. The SOC upper limit of the battery 130 is determined for the charge and discharge condition that allows charging. In the present embodiment, the notification unit 312 selects one of the following values as the SOC upper limit of the battery 130 at which charging is allowed: 60%, 80%, and 100%. The higher the SOC upper limit, the higher the predicted degree of progress of deterioration tends to be. The SOC lower limit of the battery 130 is determined for the charge and discharge condition that allows discharging. In the present embodiment, the notification unit 312 selects one of the following values as the SOC lower limit of the battery 130 at which discharging is allowed: 40%, 20%, and 0%. The lower the SOC lower limit, the higher the predicted degree of progress of deterioration tends to be.

In S224, the notification unit 312 determines the time of day during which charging and discharging is allowed for each of the charge and discharge conditions that belong to the first and second categories. In the present embodiment, the notification unit 312 selects one of the following as the time of day during which charging and discharging is allowed: unlimited, daytime only, and nighttime only. The predicted degree of progress of deterioration tends to be the highest when the time of day during which charging and discharging is allowed is unlimited, followed by daytime only and nighttime only. For the charge and discharge condition that allows both charging and discharging, the time of day during which charging is allowed may be different from the time of day during which discharging is allowed.

In S225, the notification unit 312 determines whether charging and discharging is limited based on temperature for each of the charge and discharge conditions that belong to the first and second categories. In the present embodiment, when either the temperature of the battery 130 or the outside air temperature becomes higher than a predetermined temperature, the upper limit of the charging and discharging power is limited to a value smaller than 10 kW (e.g., 5 kW). In the present embodiment, the notification unit 312 selects either not limited or limited. The predicted degree of progress of deterioration tends to be higher when not limited than when limited. For the charge and discharge condition that allows both charging and discharging, limited may be selected for only either charging or discharging.

In S221 to S225 shown in FIG. 4 (S23 in FIG. 3), the notification unit 312 determines the charge and discharge condition that belongs to the first category and the charge and discharge condition that belongs to the second category so that these charge and discharge conditions suit the specifications of the vehicle 50 and the travel plan information. A specific example of this will be described later. After the charge and discharge condition that belongs to the first category and the charge and discharge condition that belongs to the second category are determined by the process shown in FIG. 4, the routine proceeds to S24 of FIG. 3.

Referring back to FIG. 3 together with FIGS. 1 and 2, in S24, the notification unit 312 gives a VPP notification to the vehicle 50 (more specifically, the in-vehicle terminal). Specifically, the notification unit 312 sends to the in-vehicle terminal a signal notifying: the first category (deterioration category indicating that the predicted degree of progress of deterioration is equal to or higher than the reference value); the charge and discharge condition that belongs to the first category; the second category (deterioration category indicating that the predicted degree of progress of deterioration is lower than the reference value); and the charge and discharge condition that belongs to the second category (hereinafter, this signal is also referred to as the "notification signal"). In the present embodiment, the notification signal is an example of the "signal for the notification" according to the present disclosure. With such a notification signal, the user of the vehicle 50 (the user of the battery 130) is notified of the predicted degree of progress of deterioration for each charge and discharge condition. In the present embodiment, the user of the vehicle 50 is notified of the predicted degrees of deterioration by the deterioration categories (first category and second category). The predicted degree of progress of deterioration indicated by each deterioration category may be stored in advance in the in-vehicle terminal (user terminal). In the VPP notification, the predicted degrees of deterioration indicated by the deterioration categories may be sent from the server 30 to the in-vehicle terminal instead of the deterioration categories. The predicted degrees of deterioration may be expressed numerically.

After giving the VPP notification to the in-vehicle terminal, the server 30 waits until it receives a user condition, which will be described later, from the vehicle 50 in S25. Hereinafter, the charge and discharge condition that belongs to the first category and the charge and discharge condition that belongs to the second category are also referred to as the "first charge and discharge condition" and the "second charge and discharge condition," respectively.

When the ECU 150 of the vehicle 50 receives the notification signal from the server 30 (YES in S12), the ECU 150 displays an input screen, which will be described below, on a predetermined display device (e.g., the touch panel display of the instrument panel 162 or the NAVI 170) in S13. The ECU 150 may display the input screen on the mobile terminal 80.

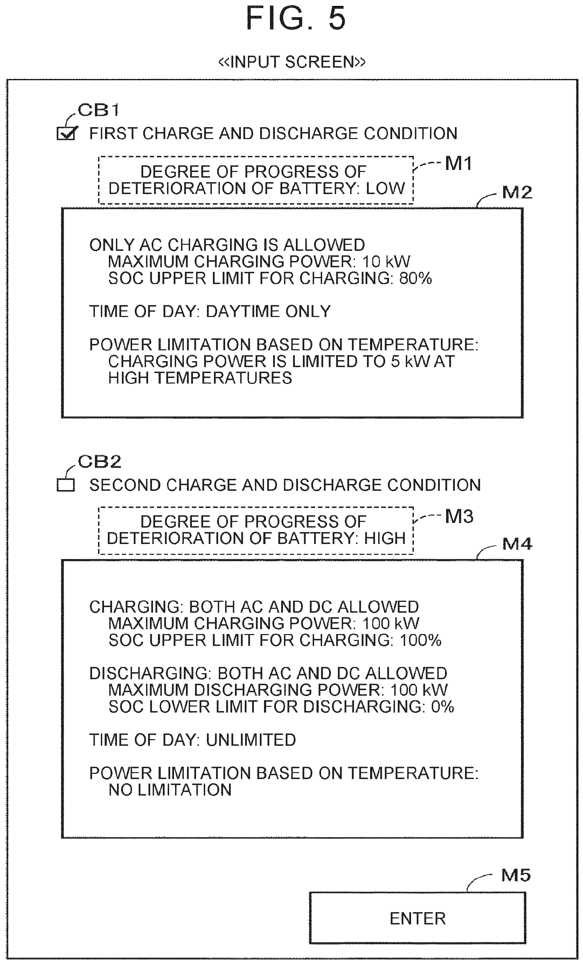

FIG. 5 shows an example of the input screen displayed in S13 of FIG. 3. Referring to FIG. 5, this input screen displays: a checkbox CB1 for selecting the first charge and discharge condition; a text M1 indicating the predicted degree of progress of deterioration for the first charge and discharge condition; a text M2 indicating the first charge and discharge condition; a checkbox CB2 for selecting the second charge and discharge condition; a text M3 indicating the predicted degree of progress of deterioration for the second charge and discharge condition; a text M4 indicating the second charge and discharge condition; and an enter button M5. This input screen prompts the user to select either the first charge and discharge condition or the second charge and discharge condition.

The text M1 shows that the predicted degree of progress of deterioration for the first charge and discharge condition is low. The text M2 shows the details of the first charge and discharge condition notified by the VPP notification. In the example shown in FIG. 5, the first charge and discharge condition is that only AC charging is allowed, the maximum charging power value is 10 kW, the SOC upper limit at which charging is allowed is 80%, charging is allowed only during the day, and charging is limited based on temperature (charging power is limited to 5 kW at high temperatures).

The text M3 shows that the predicted degree of progress of deterioration for the second charge and discharge condition is high. The text M4 shows the details of the second charge and discharge condition notified by the VPP notification. In the example shown in FIG. 5, the second charge and discharge condition is that both AC charging and DC charging are allowed, the maximum charging power value is 100 kW, the SOC upper limit at which charging is allowed is 100%, both AC discharging and DC discharging are allowed, the maximum discharging power value is 100 kW, the SOC lower limit at which discharging is allowed is 0%, charging and discharging are unlimited regardless of the time of day, and charging and discharging are not limited based on temperature.

As described above, the server 30 (more specifically, the notification unit 312) determines the first charge and discharge condition and the second charge and discharge condition based on the specifications of the vehicle 50 and the travel plan information. Therefore, each charge and discharge condition determined by the notification unit 312 may vary depending on the specifications of the vehicle 50 and the travel plan information.

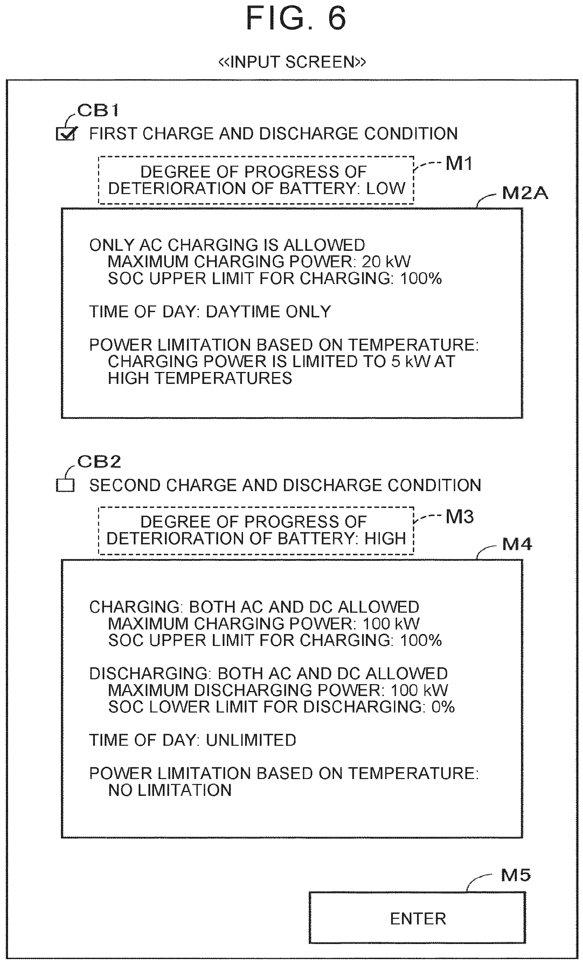

FIG. 6 shows a first modification of the input screen shown in FIG. 5. Referring to FIG. 6, when the travel plan information indicates a long distance travel plan, the notification unit 312 may determine the condition shown by a text M2A instead of the condition (text M2) shown in FIG. 5 as the first charge and discharge condition. The maximum charging power value and the SOC upper limit at which charging is allowed in the first charge and discharge condition shown by the text M2A are higher than those in the first charge and discharge condition (text M2) shown in FIG. 5. The long distance travel becomes easier under this first charge and discharge condition (text M2A).

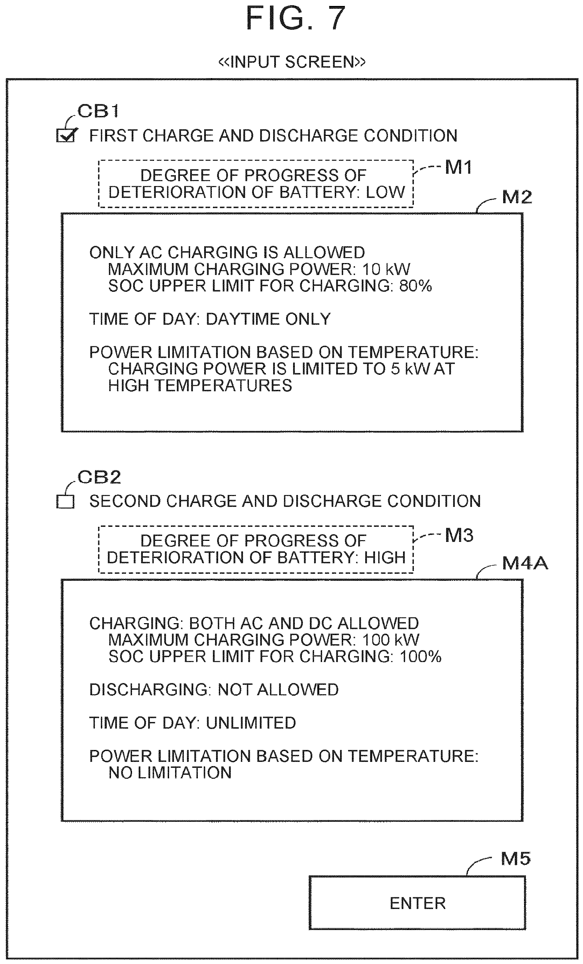

FIG. 7 shows a second modification of the input screen shown in FIG. 5. Referring to FIG. 7, when the notification unit 312 receives a request for a VPP notification from the user terminal of the vehicle whose equipment is not compatible with external power feeding (discharging), the notification unit 312 may determine the condition shown by a text M4A instead of the condition (text M4) shown in FIG. 5 as the second charge and discharge condition. External power feeding (discharging) is prohibited in the second charge and discharge condition shown by the text M4A.

In S14 of FIG. 3, the ECU 150 determines whether either the first charge and discharge condition or the second charge and discharge condition is selected by the user. The user can select or deselect the first charge and discharge condition using the checkbox CB1 shown in FIG. 5. The user can also select or deselect the second charge and discharge condition using the checkbox CB2 shown in FIG. 5. The first charge and discharge condition is selected in the example shown in FIG. 5. When the user presses the enter button M5 with either the first charge and discharge condition or the second charge and discharge condition selected, the determination result of S14 of FIG. 3 is YES, and the routine proceeds to S15. Hereinafter, the charge and discharge condition (first charge and discharge condition or second charge and discharge condition) selected by the user is also referred to as the "user condition."

Referring back to FIG. 3 together with FIGS. 1 and 2, in S15, the ECU 150 saves the user condition in the storage device 153 and then sends the user condition to the server 30. Thereafter, the ECU 150 sets a user condition flag in S16, which means the user condition flag is ON. The user condition flag is prepared in advance in the storage device 153. When the user condition flag is ON, it means that the user condition is set in the ECU 150. When the server 30 receives the user condition from the vehicle 50 (YES in S25), the server 30 registers the user condition in the storage device 32 in S26.

As described above, when the in-vehicle terminal (user terminal) according to the present embodiment receives a notification signal from the server 30 (YES in S12) and then receives from the user an input selecting one of the charge and discharge conditions indicated by the notification signal (YES in S14), the in-vehicle terminal sends the user condition (charge and discharge condition selected by the user) to the server 30 (S15). Accordingly, based on the user condition received from the user (charge and discharge condition desired by the user), the server 30 can determine whether to make a request for energy management to that user.

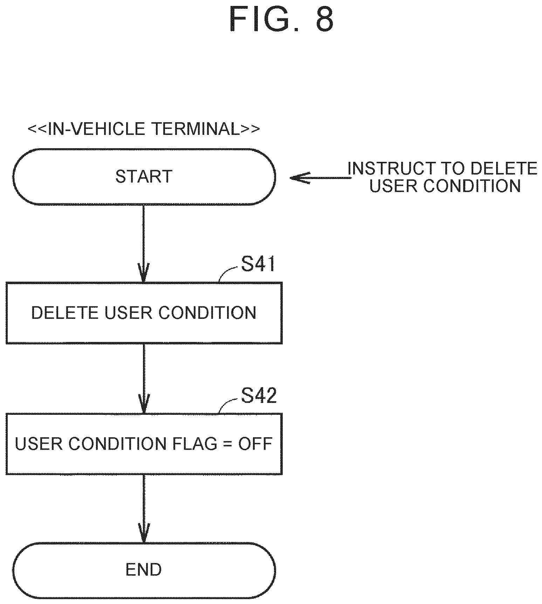

The in-vehicle terminal according to the present embodiment is configured so that the user can delete the user condition set in the ECU 150. FIG. 8 is a flowchart of a process of deleting the user condition (charge and discharge condition) set in the in-vehicle terminal (user terminal). For example, the process shown in this flowchart is performed when the user instructs the ECU 150 to delete the user condition through the input device 161.

Referring to FIG. 8 together with FIGS. 1 and 2, in S41, the ECU 150 deletes the user condition saved in the storage device 153. In the subsequent step S42, the ECU 150 clears the user condition flag, which means the user condition flag is OFF. When the user condition flag is OFF, it means that the user condition is not set in the ECU 150.

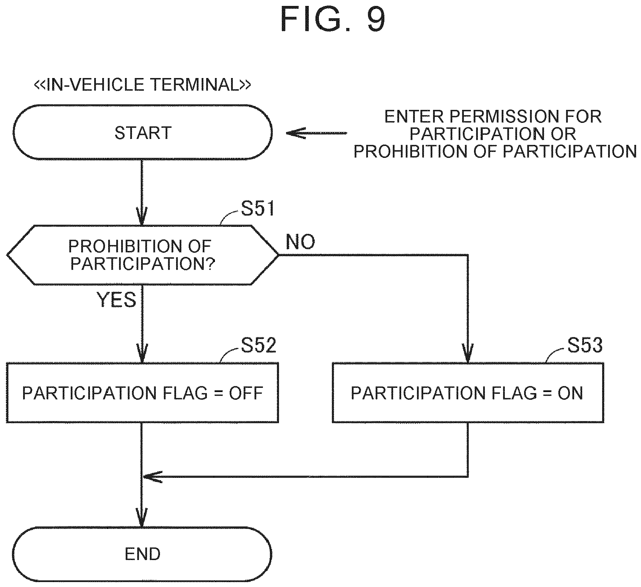

The in-vehicle terminal according to the present embodiment is configured so that either permission for participation or prohibition of participation in energy management is set based on an input from the user. FIG. 9 is a flowchart of a process of setting permission for participation or prohibition of participation in energy management in the in-vehicle terminal (user terminal). For example, the process shown in this flowchart is performed when the user enters either permission for participation or prohibition of participation in energy management to the ECU 150 through the input device 161.

Referring to FIG. 9 together with FIGS. 1 and 2, in S51, the ECU 150 determines whether the input from the user indicates prohibition of participation in energy management. When the input from the user indicates prohibition of participation (YES in S51), the ECU 150 clears a participation flag in S52, which means the participation flag is OFF. When the input from the user indicates permission for participation (NO in S51), the ECU 150 sets the participation flag in S53, which means the participation flag is ON. The participation flag is prepared in advance in the storage device 153. When the participation flag is ON, it means that the user permits the use of the battery 130 for the energy management. When the participation flag is OFF, it means that the user does not permit the use of the battery 130 for the energy management.

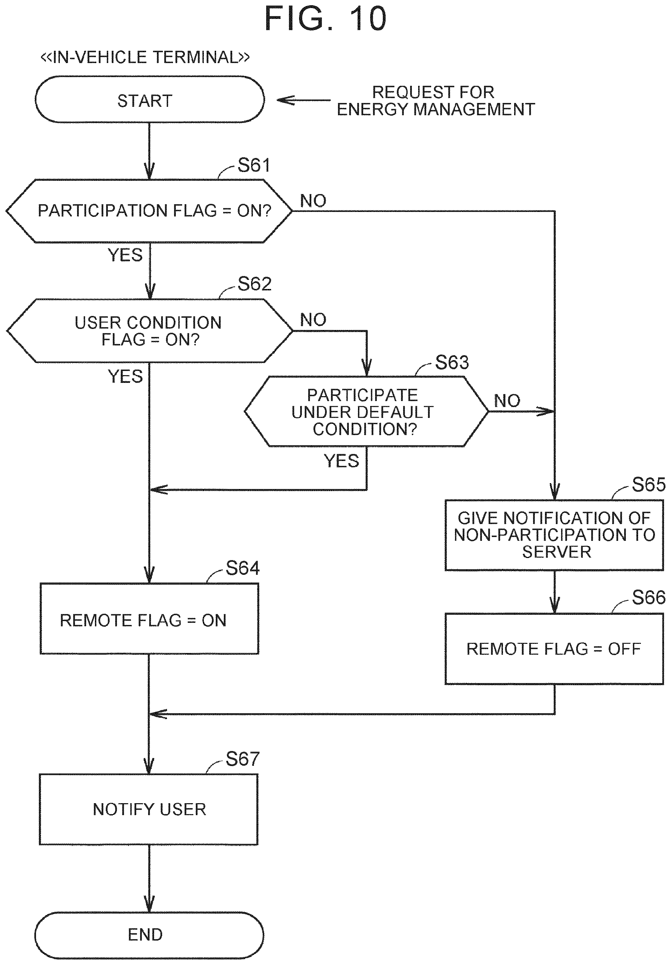

The server 30 according to the present embodiment makes a request for energy management to the in-vehicle terminal (user terminal) of the vehicle 50 when the user condition registered in S26 of FIG. 3 suits the energy management according to the request. FIG. 10 is a flowchart of a process that is performed when the in-vehicle terminal receives a request for energy management (e.g., when the in-vehicle terminal receives a VPP request signal).

Referring to FIG. 10 together with FIGS. 1 and 2, in S61, the ECU 150 determines whether the participation flag is ON. When the participation flag is ON (YES in S61), the ECU 150 determines in S62 whether the user condition flag is ON. When the user condition flag is ON (YES in S62), the routine proceeds to S64.

When the user condition flag is OFF (NO in S62), the ECU 150 determines in S63 whether to participate in the energy management under a default condition. The default condition is a charge and discharge condition that is not the user condition and that is set in the ECU 150 in the initial state (e.g., at the time of shipment). The default condition is set as desired. The energy management under the default condition is energy management that is performed by performing charging and discharging of the battery 130 under the default condition by the server 30. The ECU 150 determines whether to participate in the energy management according to the request, based on whether it is possible to respond to the request by charging and discharging the battery 130 under the default condition. For example, when the requested charging power value is larger than a maximum charging power value specified by the default condition, the determination result of S63 is NO, and the routine proceeds to S65. When the ECU 150 determines to participate in the energy management under the default condition (YES in S63), the routine proceeds to S64.

In S64, the ECU 150 sets a remote flag, which means the remote flag is ON. The remote flag is prepared in advance in the storage device 153. When the remote flag is ON, it means that the server 30 is permitted to perform remote charge and discharge control of the battery 130.

In the subsequent step S67, the ECU 150 gives a notification to the user. The ECU 150 causes, for example, the instrument panel 162 or the NAVI 170 to perform the notification step. However, the ECU 150 need not necessarily cause the instrument panel 162 or the NAVI 170 to perform the notification step. The ECU 150 may cause the mobile terminal 80 to perform the notification step. When the remote flag is ON, the ECU 150 notifies the user that it has been determined to participate in energy management in S67. When the remote flag is ON and the vehicle 50 is not plugged in, the ECU 150 prompts the user to plug in the vehicle 50 by the above notification step.

When the participation flag is OFF in S61, the ECU 150 determines not to participate in the energy management according to the request. In this case, the determination result of S61 is NO, and the routine proceeds to S65. In S65, the ECU 150 gives a notification of non-participation (notification of non-participation in the energy management according to the request) to the server 30. As described above, in the case where prohibition of participation (participation flag = OFF) is set in advance in the in-vehicle terminal (user terminal), the user terminal automatically gives a notification of non-participation to the server 30 in response to the request for energy management without requiring the user to select participation or non-participation in the energy management. Convenience for the user is thus improved.

Subsequently, the ECU 150 clears the remote flag in S66, which means the remote flag is OFF. When the remote flag is OFF, it means that the server 30 is prohibited from performing remote charge and discharge control of the battery 130. The routine then proceeds to S67. When the remote flag is OFF, the ECU 150 notifies the user that it has been determined not to participate in the energy management in S67.

FIG. 11 is a flowchart of a process related to remote charge and discharge control in an energy management method according to the present embodiment. For example, this process is started when the vehicle 50 is plugged in and the remote flag is set (remote flag = ON). There may be a predetermined grace time from the request for energy management to the start of the energy management. The user may plug in the vehicle 50 during this grace time.

Referring to FIG. 11 together with FIGS. 1 and 2, in S71, the ECU 150 determines whether it has received a charge and discharge command from the server 30 (more specifically, the control unit 311). When the ECU 150 receives a charge and discharge command from the server 30 (YES in S71), the ECU 150 performs charge and discharge control of the battery 130 according to the charge and discharge command in S72. The charge and discharge control of the battery 130 that is performed in S72 is VPP charging and discharging. The routine then proceeds to S73.

In S73, the ECU 150 determines whether the performed charge and discharge control satisfies a predetermined charge and discharge condition. The predetermined charge and discharge condition is the user condition when the user condition flag is ON, and is the default condition when the user condition flag is OFF. Normally, charge and discharge control that does not satisfy the predetermined charge and discharge condition is not performed. However, charge and discharge control that does not satisfy the predetermined charge and discharge condition may be performed due to some abnormality. When charge and discharge control that does not satisfy the predetermined charge and discharge condition is performed (NO in S73), the ECU 150 notifies the server 30 of the end of the remote charge and discharge control in S75 and then clears the remote flag in S76, which means the remote flag is OFF. The ECU 150 thus cancels the remote charge and discharge control. This configuration reduces the possibility that charge and discharge control that does not satisfy the predetermined charge and discharge condition may be performed.

When the performed charge and discharge control satisfies the predetermined charge and discharge condition (YES in S73), the routine proceeds to S74. In S74, the ECU 150 determines whether the energy management is finished. When the energy management is finished, the ECU 150 receives an end notification from the server 30. The ECU 150 may determine whether the energy management is finished based on whether the ECU 150 has received the end notification. When the energy management is not finished (NO in S74), the routine returns to S71. When the energy management is finished (YES in S74), the routine proceeds to S76. The routine may also proceed to S76 when the ECU 150 does not receive a charge and discharge command from the server 30 (NO in S71) for a predetermined time.

In S76, the ECU 150 clears the remote flag, which means the remote flag is OFF. The series of steps shown in FIG. 11 ends after S76. As described above, in the remote charge and discharge control, the plugged in vehicle 50 performs charge and discharge control of the battery 130 according to the charge and discharge command from the server 30. The charge and discharge command is sent from the server 30 to the vehicle 50 by wireless communication. The server 30 remotely controls the vehicle 50 according to the charge and discharge command. When the energy management according to the request is charging, external charging is performed according to the charge and discharge command. When the energy management according to the request is discharging, external power feeding is performed according to the charge and discharge command.

When the remote flag is OFF, the remote charge and discharge control is not performed, and the ECU 150 performs normal charge and discharge control. In an example of the normal charge and discharge control, charge control in which immediate charging or timer charging is performed and discharge control in which external power feeding is performed in response to a request from the user are performed. Immediate charging is external charging that is started as soon as the vehicle 50 is plugged in. Timer charging is external charging that is started when predetermined start time comes with the vehicle 50 plugged in. Immediate charging is performed when timer charging is not scheduled in the ECU 150. Timer charging is performed when timer charging is scheduled in the ECU 150.

As described above, the energy management method according to the present embodiment includes: notifying the user of the battery 130 of a plurality of charge and discharge conditions and, for each of the charge and discharge conditions, a predicted degree of progress of deterioration of the battery 130 (energy storage device) obtained on the assumption that the battery 130 performs charging and discharging for energy management under that charge and discharge condition (S24 in FIG. 3); and performing charging and discharging for energy management under one of the charge and discharge conditions (S72 in FIG. 11). According to this energy management method, the user can more easily appropriately determine whether to participate in the energy management.

The vehicle 50 may perform energy management using an EVSE capable of performing only AC power feeding, namely capable of supplying only AC power, or may perform energy management using an EVSE capable of performing only DC power feeding, namely capable of supplying only DC power. The vehicle 50 may perform energy management using an EVSE capable of performing both AC power feeding and DC power feeding. The EVSE may be configured to switch between AC power feeding and DC power feeding as instructed by the vehicle 50. The vehicle 50 may include a plurality of the inlets (AC inlet and DC inlet).

The power conversion circuit of the charger and discharger 120 may be mounted on the EVSE instead of the vehicle. A management computer (e.g., the server 30) may perform energy management by remotely controlling the power conversion circuit mounted on the EVSE while communicating with the vehicle 50.

In the process shown in FIG. 3, the server 30 gives a VPP notification (S24) in response to a request from the user of the battery 130. However, the server 30 need not necessarily give a VPP notification in response to a request from the user of the battery 130, and may give a VPP notification even without a request from the user. For example, the server 30 may perform the process (S21 to S26) shown in FIG. 3 on the user terminal of the vehicle selected as a candidate DSR for a request for energy management before the energy management is performed (for example, a predetermined amount of time before the time the energy management is performed).

In the above embodiment, the server 30 acquires the travel plan information from the in-vehicle terminal (user terminal). However, the server 30 need not necessarily acquire the travel plan information from the in-vehicle terminal (user terminal). The server 30 may acquire the travel plan information by learning based on past data. For example, regarding the vehicle 50, the server 30 may acquire by learning the travel plan information indicating short distance travel plans for commuting for weekdays and long distance travel plans for leisure for holidays and weekends. In this case, the server 30 may change the first charge and discharge condition according to the day the energy management is performed. For example, the user may be notified of the first charge and discharge condition (text M2) shown in FIG. 5 by the VPP notification when the energy management is performed on a weekday, and may be notified of the first charge and discharge condition (text M2A) shown in FIG. 6 by the VPP notification when the energy management is performed on a holiday or weekend. The above learning may be conducted using big data and artificial intelligence (AI).

The charge and discharge conditions to be notified to the user need not necessarily be determined by the method shown in FIG. 4. For example, S225 may be omitted in the process shown in FIG. 4. At least one of S222, S223, and S224 may be omitted.

In the VPP notification, the user may be notified of the probability of participation in energy management (probability of being able to participate in energy management) in addition to the predicted degree of progress of deterioration for each charge and discharge condition, and in S13 of FIG. 3, the probability of participation in energy management for each charge and discharge condition may be displayed on the input screen. The larger the number of charging and discharging methods that are allowed, the higher the probability of participation in energy management. The longer the time of day during which charging and discharging is allowed, the higher the probability of participation in energy management.

In the above embodiment, the in-vehicle terminal mounted on the vehicle 50 is used as the user terminal. However, the user terminal is not limited to the in-vehicle terminal. Instead of or in addition to the in-vehicle terminal, the mobile terminal 80 carried by the user of the vehicle 50 may be used as the user terminal. The mobile terminal 80 may receive notifications, requests, and commands from the server 30 by wireless communication and may send instructions to the in-vehicle terminal by wireless communication to cause the in-vehicle terminal to perform vehicle control (e.g., charge and discharge control of the battery 130).

The configuration of the management system including the management computer is not limited to the configuration shown in FIG. 2. For example, the server 10 may have the functions of the server 30, and the server 30 may be omitted. The server 10 can function as the management computer. The power network is not limited to a large-scale power network (power grid) developed as an infrastructure, and may be a microgrid. The computer that sends a VPP request signal may be a server for an electricity market (e.g., a balancing market).

The configuration of the vehicle is not limited to the configuration shown in FIG. 1. For example, the vehicle may be contactlessly chargeable. The vehicle is not limited to an BEV, and may be a PHEV. The vehicle is not limited to a passenger car, and may be a bus or a truck. The vehicle is not limited to a POV, and may be a Mobility as a Service (MaaS) vehicle. The vehicle may be capable of autonomous driving or may have a flying function. The vehicle may be a vehicle capable of unmanned driving (e.g., an automatic guided vehicle (AGV) or an agricultural machine).

The energy storage device used for energy management may be mounted on a power adjustment resource other than a vehicle. The power adjustment resource may be a moving body other than a vehicle (ship, airplane, drone, walking robot, robot cleaner, space probe, etc.) or may be a stationary energy storage system (ESS).

The various modifications described above may be combined as desired. The embodiment disclosed herein should be considered as illustrative and not restrictive in all respects. The scope of the present invention is shown by the claims rather than by the above embodiment and is intended to include all modifications within the meaning and scope equivalent to those of the claims.

## Claims

1. A management system (1) comprising a management computer (30) including a processor, the processor being configured to
cause an energy storage device (130) to perform either or both of charging and discharging for energy management,
give a notification to a user of the energy storage device (130), and
in the notification, notify the user of a plurality of conditions and, for each of the conditions, notify the user of a predicted degree of progress of deterioration of the energy storage device (130) obtained on an assumption that the processor performs either or both of the charging and discharging for the energy management under that condition.

2. The management system (1) according to claim 1, wherein:
the energy storage device (130) is mounted on a vehicle (50);
a user terminal is registered in the management computer (30), the user terminal being a terminal of the user;
the processor is configured to send a signal for the notification to the user terminal; and
the user terminal includes either or both of an in-vehicle terminal mounted on the vehicle (50) and a mobile terminal (80) carried by the user.

3. The management system (1) according to claim 2, wherein:
the user terminal is configured to send travel plan information to the management computer (30), the travel plan information being information on a travel plan of the vehicle (50); and
the processor is configured to determine, based on the travel plan information, the conditions to be notified to the user by the notification.

4. The management system (1) according to claim 2 or 3, wherein the processor is configured to determine, based on a specification of the vehicle (50), the conditions to be notified to the user by the notification.

5. The management system (1) according to any one of claims 2 to 4, wherein:
the user terminal is configured to accept an input from the user; and
the user terminal is configured to, when the user terminal receives the signal for the notification and then receives from the user an input selecting one of the conditions indicated by the signal, send the condition selected by the user to the management computer (30).

6. The management system (1) according to claim 5, wherein:
the user terminal is configured to set either permission for participation or prohibition of participation in energy management based on the input from the user; and
the user terminal is configured to, when the user terminal receives a request for energy management with the prohibition of participation set in the user terminal, notify the management computer (30) of non-participation in the energy management according to the request.

7. The management system (1) according to claim 6, wherein:
the user terminal is configured to permit remote charge and discharge control of the energy storage device (130) by the processor when the user terminal determines to participate in the energy management according to the request; and
the user terminal is configured to prohibit the remote charge and discharge control when the user terminal determines not to participate in the energy management according to the request.

8. The management system (1) according to any one of claims 1 to 7, wherein each of the conditions indicates at least one of the following: an allowable charging method, an allowable maximum charging power value, an upper limit of state of charge of the energy storage device (130) at which charging is allowed, and time of day during which charging is allowed.

9. The management system (1) according to any one of claims 1 to 8, wherein each of the conditions indicates at least one of the following: an allowable discharging method, an allowable maximum discharging power value, an lower limit of state of charge of the energy storage device (130) at which discharging is allowed, and time of day during which discharging is allowed.

10. An energy management method, comprising:
notifying a user of a plurality of conditions, the user being a user of an energy storage device (130);
notifying the user of, for each of the conditions, a predicted degree of progress of deterioration of the energy storage device (130) obtained on an assumption that the energy storage device (130) performs either or both of charging and discharging for energy management under that condition; and
performing either or both of the charging and the discharging for the energy management under one of the conditions.
